# EUROPÄISCHE PATENTANMELDUNG

(11) **EP 4 699 428 A1**
(43) Veröffentlichungstag der Anmeldung: **25.02.2026**
(21) Anmeldenummer: 25195277.6
(22) Anmeldetag: 12.08.2025
(51) Int. Cl.: A01C 21/00

(54) **VERFAHREN ZUM BETREIBEN EINES LANDWIRTSCHAFTLICHEN ARBEITSGERÄTS**

(30) Priorität: 19.08.2024 DE 102024123526
(71) Anmelder: Amazonen-Werke H. Dreyer SE & Co. KG, 49205 Hasbergen (DE)
(72) Erfinder: DR. HEISEL, Per-Christian, 49205 Hasbergen-Gaste (DE)
(74) Vertreter: Heisel, Per-Christian

(57) **Zusammenfassung**

Verfahren zum Betreiben eines landwirtschaftlichen Arbeitsgeräts (10), bei welchem wenigstens ein Hilfsstoff (22), welcher zur chemischen Reaktion mit dem Boden und/oder Pflanzen (23) auf einer landwirtschaftlichen Nutzfläche vorgesehen ist, ausgebracht wird, und bei welchem wenigstens eine vordefinierte Ausbringmenge für den Hilfsstoff (22) abgerufen und/oder vorgegeben wird. Um ein Verfahren zum Betreiben eines landwirtschaftlichen Arbeitsgeräts (10) anzugeben, mit welchem die Versorgung und/oder Behandlung einer landwirtschaftlichen Nutzfläche mit Hilfsstoffen (22) noch weiter verbessert wird, ist vorgesehen, dass die Ausbringmenge für den Hilfsstoff (22) unmittelbar vor und/oder während der Ausbringung in Abhängigkeit erfassbarer und/oder abrufbarer Wetter- und/oder Umgebungsdaten angepasst wird.

## Beschreibung

Die Erfindung betrifft ein Verfahren zum Betreiben eines landwirtschaftlichen Arbeitsgeräts gemäß dem Oberbegriff des Patentanspruches 1, ein landwirtschaftliches Arbeitsgerät gemäß dem Oberbegriff des Patentanspruches 9 und ein Steuer- und/oder Regelsystem gemäß dem Oberbegriff des Patentanspruches 10.

Auf dem Gebiet der Landwirtschaft ist es bekannt, Hilfsstoffe mittels eines landwirtschaftlichen Arbeitsgeräts auf einer landwirtschaftlichen Nutzfläche auszubringen. Derartige Hilfsstoffe sind dabei zur chemischen Reaktion mit dem Boden und/oder den Pflanzen vorgesehen und je nach Anwendung in der Regel als Feststoffe und/oder fließfähige Stoffe bzw. Flüssigkeiten ausgeführt. Je nach Anwendung und/oder Ausführung des jeweiligen auszubringenden Hilfsstoffs kommen dabei häufig Arbeitsgeräte wie etwa Verteilmaschinen, Pflanzenbehandlungsgeräte, Bodenbearbeitungsgeräte und/oder Kombinationen davon zum Einsatz, welche in der Regel nach Art von Sämaschinen, Düngerstreuern, Feldspritzen, Hackgeräten usw., ausgeführt sind.

Die notwendigen Ausbringmengen für die Hilfsstoffe hängen dabei typischerweise von mehreren Parametern bzw. Faktoren ab. Derartige Parameter können beispielsweise die Boden- und/oder Pflanzeneigenschaften entlang der Nutzfläche betreffen. Ferner können die Parameter auch die Type bzw. Sorte und/oder Konzentration der Hilfsstoffe selbst und/oder eines zusätzlichen auszubringenden bzw. ausgebrachten Verteilguts, wie etwa die Sorte eines Saatguts, betreffen oder einer Kombination der Hilfsstoffe mit dem Verteilgut. Dabei ist in der Regel auch zu berücksichtigen, dass derartige Hilfsstoffe, insbesondere in Form von Düngemittel oder dergl., mit einem anderen Hilfsstoff und/oder mit dem Verteilgut, insbesondere in Form von Saatgut, und/oder mit den Pflanzen hinsichtlich der verfügbaren Wassermenge im Boden (bzw. der Bodenfeuchtigkeit) konkurrieren. Insbesondere gilt dabei, je größer die Ausbringmenge und/oder Konzentration des Hilfsstoffs und/oder je weniger verfügbares Wasser im Boden (bzw. eine zu geringe Bodenfeuchtigkeit), desto größer die Gefahr, dass der eine oder die mehreren Hilfsstoffe, insbesondere das Düngemittel, dem Boden und damit dem Verteilgut, insbesondere Saatgut, und/oder den Pflanzen zu viel Wasser entziehen und/oder zu Verätzungen am Verteilgut, insbesondere Saatgut, und/oder an den Pflanzen, insbesondere den Blattoberflächen, führen.

Um derartige Hilfsstoffe in möglichst optimalen und/oder bedarfsgerechten Mengen auszubringen, sind aus dem Stand der Technik verschiedenste Ansätze bekannt.

In der modernen Landwirtschaft haben sich unter anderem Ausbringungsverfahren bewährt, bei welchen die entsprechenden Ausbringmengen anhand von elektronischen und/oder digitalen Feldkartendaten, insbesondere mittels sogenannter Applikationskarten, georeferenziert durch das jeweilige Arbeitsgerät abgerufen und/oder eingestellt werden. Der Hilfsstoffbedarf des Bodens und/oder der Pflanzen wird dazu in der Regel vorab anhand von Luftaufnahmen, welche z.B. mittels Satelliten und/oder Drohnen gewonnen werden, ermittelt. Ein derartiges Verfahren ist beispielsweise in der Druckschrift WO 00/23937 A1 beschrieben.

Ferner ist auch bekannt, moderne landwirtschaftliche Arbeitsgeräte mit geeigneter Sensorik auszustatten, mittels welcher die Boden- und/oder Pflanzeneigenschaften entlang der Nutzfläche detektiert und anhand welcher der jeweilige Hilfsstoffbedarf während des Betriebs und/oder während dem Ausbringvorgang, insbesondere lokal und/oder zumindest quasi punktuell, ermittelt werden kann. Typischerweise kommen dabei Arbeitsgeräte mit einer den Boden und/oder die Pflanzen berührenden oder berührungslos abtastenden Sensorik zum Einsatz. Ein derartiges landwirtschaftliches Arbeitsgerät mit entsprechender Sensorik ist beispielweise in der Druckschrift US 2018/0239044 A1 oder EP 4 223 095 A1 beschrieben.

Ebenso gehört es zum Stand der Technik, dass der Hilfsstoffbedarf und damit die notwendige, insbesondere vordefinierte, Ausbringmenge für die Hilfsstoffe zumindest teilweise manuelle durch den Landwirt bestimmt, eingestellt und/oder angepasst wird.

Die beschriebenen Ansätze haben jedoch gemein, dass die örtlichen Wetter-und/oder Umgebungsbedingungen bisher unzureichend bei der Bestimmung des Hilfsstoffbedarfs bzw. der notwendigen Ausbringmenge für den Hilfsstoff berücksichtigt werden. Da sich die während und/oder nach der Ausbringung einstellenden Wetter- und/oder Umgebungsbedingungen typischerweise erst verzögert auf die Boden- und/oder Pflanzeneigenschaften auswirken, wird der tatsächliche Hilfsstoffbedarf nachträglich signifikant beeinflusst. Mit anderen Worten wird die zeitliche Verzögerung, mit welcher die aktuellen und/oder zukünftigen Wetter- und/oder Umgebungsbedingungen Einfluss auf die Boden-und/oder Pflanzeneigenschaften einer landwirtschaftlichen Nutzfläche nehmen, bisher in nicht ausreichender Weise in Betracht gezogen. Dies führt bisher häufig zu Schäden, insbesondere in Form von Verätzungen, am ausgebrachten Verteilgut, insbesondere Saatgut, und/oder den Pflanzen.

Der vorliegenden Erfindung liegt daher die Aufgabe zugrunde, ein Verfahren zum Betreiben eines landwirtschaftlichen Arbeitsgeräts anzugeben, mit welchem die Versorgung und/oder Behandlung einer landwirtschaftlichen Nutzfläche, insbesondere des Bodens und/oder der Pflanzen, mit Hilfsstoffen, wie etwa Düngemittel, noch weiter verbessert wird. Ferner ist es Aufgabe der Erfindung Schäden an Verteilgütern und/oder Pflanzen, welche aufgrund von Wechselwirkungen mit den Hilfsstoffen entstehen, zu vermeiden.

Diese Aufgabe wird erfindungsgemäß bei einem Verfahren der eingangs genannten Art mit den Merkmalen des Patentanspruchs 1 gelöst. Vorteilhafte Weiterbildungen sind in den abhängigen Unteransprüchen angegeben.

Demnach wird gemäß dem erfindungsgemäßen Verfahren wenigstens ein, vorzugsweise nach Art von Düngemittel ausgeführter, Hilfsstoff, welcher zur chemischen Reaktion mit dem Boden und/oder Pflanzen auf einer landwirtschaftlichen Nutzfläche vorgesehen ist, ausgebracht. Außerdem wird wenigstens eine vordefinierte, vorzugsweise georeferenziert hinterlegte, Ausbringmenge für den Hilfsstoff bestimmt, abgerufen und/oder eingestellt. Des Weiteren wird die Ausbringmenge für den Hilfsstoff unmittelbar vor und/oder während der Ausbringung in Abhängigkeit erfassbarer und/oder abrufbarer Wetter-und/oder Umgebungsdaten angepasst.

In Folge dieser Maßnahme wird die vordefinierte Ausbringmenge für den, vorzugsweise als Düngemittel ausgeführten, Hilfsstoff an die tatsächlich zum Zeitpunkt unmittelbar vor und/oder während der Ausbringung erfassbaren und/oder abrufbaren Wetter- und/oder Umgebungsdaten angepasst. In bevorzugter Weise ermöglicht dieser Ansatz eine Kombination der, vorzugsweise anhand einer Applikationskarte oder Erfahrungen des Landwirts bestimmten, vordefinierten Ausbringmengen für den Hilfsstoff mit den unmittelbar vor und/oder während der Ausbringung vorliegenden und/oder abrufbaren Wetter- und/oder Umgebungsdaten. Somit kann eine optimale Versorgung des Bodens und/oder der Pflanzen und/oder des zusätzlich auszubringenden bzw. ausgebrachten Verteilguts, insbesondere Saatguts, sichergestellt und insbesondere Schäden in Form von Verätzungen vermieden werden.

Je nach Ausführung kann es sich bei einem derartigen Hilfsstoff vorzugsweise um ein Düngemittel, Pflanzenschutzmittel, Schädlingsbekämpfungsmittel, Unkrautvernichtungsmittel oder dergleichen handeln. Ferner kann es sich alternativ oder zusätzlich bei dem Hilfsstoff um eine Mischzusammensetzung mehrerer gleichartiger, z.B. fester oder flüssiger, Hilfsstoffe oder alternativ um unterschiedliche Hilfsstoffe, z.B. feste und flüssige Hilfsstoffe gemeinsam, handeln, welche von einem einzigen Arbeitsgerät oder unterschiedlichen Arbeitsgeräten entweder in einem oder unterschiedlichen Ausbringvorgängen ausgebracht werden. Alternativ oder zusätzlich ist unter einer chemischen Reaktion mit dem Boden auch eine, insbesondere direkte, chemische Reaktion mit dem auf dem Boden ausgebrachten und/oder befindlichen Verteilgut, vorzugsweise Saatgut bzw. Saatgutkörner, zu verstehen.

Unter den Wetter- und/oder Umgebungsdaten ist vorzugsweise das lokale Wetter zumindest am Ort der Nutzfläche zu verstehen. Insbesondere sind dabei ein oder mehrere Parameter des Wetters aus Temperatur, Luftfeuchtigkeit, Niederschlag, Sonnenscheindauer, Wind, usw. zu verstehen. Die Wetterdaten können dabei wenigstens einen dieser Parameter oder alternativ mehrere dieser Parameter oder ferner alle diese Parameter umfassen. Alternativ oder zusätzlich können die Wetterdaten auch einen oder mehrere Zeitpunkte, insbesondere wann und/oder mit welcher Höhe bzw. welchem Betrag wenigstens einer dieser Parameter am entsprechenden Ort der Nutzfläche eintritt bzw. zu erwarten ist, umfassen. Insbesondere kann unter dem Niederschlag der Niederschlagszeitpunkt, die Niederschlagshäufigkeit und/oder die Niederschlagsmenge verstanden werden. Die Daten zum Wind können ferner die Windrichtung und/oder Windgeschwindigkeit umfassen. Alternativ oder zusätzlich können die Daten auch die Luftbewegungen insbesondere im Bereich des Bodens und/oder im Bereich der Blattoberflächen an den Pflanzen umfassen. Ferner können die Parameter alternativ oder zusätzlich auch eine zu erwartende Bodenfeuchtigkeit umfassen, welche besonders bevorzugt teilflächenspezifisch und/oder punktuell aufgelöst ist.

Die Begriffe "unmittelbar vor und/oder während der Ausbringung" meinen vorzugsweise einen Zeitpunkt zumindest am Vortag und/oder am Tag der Ausbringung. Ferner bevorzugt ist darunter auch ein Zeitpunkt nur wenige Stunden oder Minuten vor der eigentlichen Ausbringung des Hilfsstoffs zu verstehen. Bevorzugt sind dabei 1 bis 60 Sekunden, 1 bis 10 Minuten oder 1 bis 10 Stunden vor der Ausbringung. Besonders bevorzugt ist darunter auch ein Zeitpunkt zu verstehen, an dem das Arbeitsgerät die jeweilige Nutzfläche, insbesondere eine Feldauffahrt und/oder das Vorgewende, erreicht. Ferner bevorzugt kann darunter auch ein Zeitpunkt verstanden werden, an dem das Arbeitsgerät für den Arbeitsbeginn zum Ein- und/oder Voreinstellen, insbesondere zum Einnehmen der Arbeitsstellung, positioniert und/oder verbracht wird. Alternativ oder zusätzlich kann dabei auch zumindest ein Zeitpunkt nach dem Arbeitsbeginn, das heißt insbesondere während der Überfahrt und/oder Ausbringung auf der Nutzfläche verstanden werden. Vorzugsweise sind dabei auch mehrere Zeitpunkte verstehen. Beispielsweise ein erster Zeitpunkt unmittelbar vor der Ausbringung und wenigstens ein weiterer Zeitpunkt während der Ausbringung. Alternativ oder zusätzlich dazu können darunter auch mehrere unterschiedliche Zeitpunkte während der Ausbringung verstanden werden.

Darüber hinaus ist unter einem Anpassen der Ausbringmenge für den Hilfsstoff vorzugsweise eine Erhöhung und/oder Reduzierung der, insbesondere zuvor, vordefinierten und abgerufenen, vorgegebenen und/oder eingestellten Ausbringmenge für den Hilfsstoff zu verstehen. Ferner kann unter dem Anpassen der Ausbringmenge für den Hilfsstoff alternativ auch eine Überschreibung oder Neudefinition der ursprünglich vordefinierten Ausbringmenge verstanden werden.

Des Weiteren ist in bevorzugter Weise denkbar, dass die vordefinierte Ausbringmenge für den Hilfsstoff alternativ oder zusätzlich unmittelbar vor und/oder während der Ausbringung des Hilfsstoffs, vorzugsweise unter Berücksichtigung einer zusätzlichen Sensorik am Arbeitsgerät, ermittelt und während der Ausbringung unter Berücksichtigung der Wetter- und/oder Umgebungsdaten angepasst wird. Mit anderen Worten ist denkbar, dass die, vorzugsweise anhand von Applikationskarten und/oder einer Sensorik, vordefinierten Ausbringmengen für den Hilfsstoff alternativ oder zusätzlich während der Ausbringung nach Art einer Grundeinstellung vorgegeben werden, welche dann während der Ausbringung zumindest temporär und/oder lokal, insbesondere teilflächenspezifisch und/oder punktuell, unter Berücksichtigung der Wetter- und/oder Umgebungsdaten angepasst werden. Insbesondere können dabei auch definierte Grenzwerte für die Wetter- und/oder Umgebungsdaten vorgesehen sein, welche zur Anpassung der Ausbringmenge für den Hilfsstoff je nach Ausführung zunächst zu erreichen und/oder zu überschreiten und/oder zu unterschreiten sind.

In einer bevorzugten Ausführungsform des erfindungsgemäßen Verfahrens umfassen die Wetter- und/oder Umgebungsdaten Prognosen für das Wetter und/oder Prognosen für die Bodenfeuchtigkeit. Die Wetterdaten umfassen bevorzugt eine Niederschlagsprognose, welche besonders bevorzugt eine Prognose über zumindest den nächsten oder die nächsten Niederschlagszeitpunkte und/oder die Niederschlagshäufigkeiten und/oder die Niederschlagsmengen abbilden. Ferner können derartige Wetterdaten alternativ oder zusätzlich auch Prognosen für den Wind, insbesondere die Windrichtung und/oder Windstärke, umfassen. Bevorzugt können die Prognosen zum Wind auch einen Verlauf der Windrichtung und/oder Windstärke über einen definierten zukünftigen Zeitraum umfassen. Alternativ oder zusätzlich kann eine Prognose zur Bodenfeuchtigkeit die, insbesondere teilflächenspezifisch und/oder punktuell, zu erwartende Bodenfeuchtigkeit umfassen, welche sich unmittelbar vor und/oder während der Ausbringung eingestellt hat und/oder welche sich nach der Ausbringung einstellen wird. Je nach Ausführung können unter der Prognose vorzugsweise Wetter- und/oder Umgebungsdaten zu einem definierten Zeitpunkt und/oder in einem definierten Zeitraum während und/oder nach der Ausbringung des Hilfsstoffs verstanden werden. Bevorzugt kann ein Zeitpunkt und/oder Zeitraum auf Basis von Sekunden, Minuten, Stunden, Tagen, Wochen und/oder Monaten für die Prognose der Wetter- und/oder Umgebungsdaten verwendet werden. Alternativ oder zusätzlich können für die Prognose der Wetter- und/oder Umgebungsdaten auch die Daten bzw. Informationen einer elektronischen Wetter-und/oder Niederschlagskarte, insbesondere nach Art eines Regenradars oder dergl., welche beispielsweise von einem Wetterdienst bereitgestellt wird, verwendet werden. Die für die Ausbringung zu berücksichtigenden Prognosen sind somit besonders aktuell, wodurch Schäden, insbesondere in Form von Verätzungen, am Verteilgut und/oder den Pflanzen zumindest nahezu ausgeschlossen werden.

Anders ausgedrückt, werden die Prognosen bevorzugt so spät wie möglich vor der Ausbringung bestimmt und/oder abgerufen, so dass Änderungen in den Wetter-und/oder Umgebungsdaten und/oder den Prognosen bei der Bestimmung der Ausbringmenge für den Hilfsstoff noch berücksichtigt werden können.

In einer Weiterbildung des erfindungsgemäßen Verfahrens wird die Ausbringmenge, vorzugsweise teilflächenspezifisch und/oder punktuell, an die Prognosen, insbesondere an eine zu erwartende Niederschlagsmenge und/oder Bodenfeuchtigkeit, angepasst. Vorzugsweise ist hierbei vorgesehen, dass bei einer zu erwartenden niedrigen Niederschlagsmenge und/oder Bodenfeuchtigkeit die Ausbringmenge für den Hilfsstoff gegenüber der vordefinierten Ausbringmenge verringert wird. Alternativ oder zusätzlich ist hierbei vorgesehen, dass bei einer zu erwartenden hohen und/oder ausreichenden Niederschlagsmenge und/oder Bodenfeuchtigkeit die Ausbringmenge für den Hilfsstoff gegenüber der vordefinierten Ausbringmenge zumindest unverändert bleibt und/oder erhöht wird. Mit anderen Worten, wenn eine ausreichende Niederschlagsmenge und/oder Bodenfeuchtigkeit, insbesondere Wasser im Boden, zum Zeitpunkt der Ausbringung und/oder zu einem späteren Zeitpunkt, insbesondere vor Eintritt möglicher Schäden am Verteilgut und/oder den Pflanzen, verfügbar ist und/oder verfügbar wird, wird die vordefinierte Ausbringmenge während der Ausbringung beibehalten und/oder vom Bediener und/oder vom Arbeitsgerät unverändert übernommen und/oder eingestellt. Die Definition für eine hohe und/oder niedrige Niederschlagsmenge und/oder Bodenfeuchtigkeit kann dabei vorzugsweise werksseitig vom Arbeitsgerätehersteller, und/oder vom Hilfsstofflieferanten und/oder manuell von einem Bediener bzw. dem Landwirt vorgebbar sein, wobei hierzu bevorzugt entsprechende Grenzwerte innerhalb des Arbeitsgeräts einstellbar sind. Alternativ oder zusätzlich kann auch eine entsprechende Kennlinie, Kennfeld oder dergl. abrufbar und/oder vorgebbar sein, welche einen Zusammenhang und/oder Empfehlungen zwischen den Wetter- und/oder Umgebungsdaten und der Ausbringmenge für den Hilfsstoff liefern. Besonders bevorzugt hängt die Definition für eine hohe und/oder niedrige Niederschlagsmenge und/oder Bodenfeuchtigkeit und damit insbesondere für die Grenzwerte vom Typ, der Konzentration und/oder der Ausbringmenge des wenigstens einen auszubringenden Hilfsstoffs ab. Somit können die entscheidenden Parameter, welche die Wechselwirkungen zwischen den Hilfsstoffen und dem Verteilgut und/oder den Pflanzen beeinflussen, mit noch höherer Zuverlässigkeit berücksichtigt werden.

In einer anderen bevorzugten Ausführungsform des erfindungsgemäßen Verfahrens umfassen die Wetter- und/oder Umgebungsdaten historische Aufzeichnungen für das Wetter, insbesondere den Niederschlag, und/oder historische Aufzeichnungen für die Bodenfeuchtigkeit. Vorzugsweise beinhalten derartige historische Aufzeichnungen die Wetter- und/oder Umgebungsdaten zumindest unmittelbar vor der Ausbringung. Alternativ oder zusätzlich können die historischen Aufzeichnungen auch Wetter- und/oder Umgebungsdaten zu einem definierten Zeitpunkt und/oder Zeitraum, beispielsweise einige Sekunden, Minuten, Stunden, Tage, Wochen, Monate oder Jahre vor der Ausbringung beinhalten. Beispielsweise kann dies auch ein Zeitpunkt und/oder Zeitraum aus wenigstens einer Vorsaison sein. Besonders bevorzugt lassen sich anhand der historischen Aufzeichnungen der Wetter- und/oder Umgebungsdaten die während der Ausbringung vorliegende Bodenfeuchtigkeit und/oder die Wassermenge im Boden und/oder die Aufnahmefähigkeit des Bodens für das Wasser bestimmen, welche ferner bevorzugt gemeinsam mit den Prognosen der Wetter- und/oder Umgebungsdaten berücksichtigt und/oder verrechnet werden. Alternativ oder zusätzlich kann vorgesehen sein, dass die vordefinierten Ausbringmengen für den Hilfsstoff unter Berücksichtigung der historischen Aufzeichnungen für das Wetter und/oder die Bodenfeuchtigkeit ermittelt und/oder angepasst werden, welche vorzugsweise zu einem späteren Zeitpunkt unter Berücksichtigung der Prognosen für die Wetter- und/oder Umgebungsdaten erneut angepasst werden. Dadurch lassen sich neben den Prognosen unter anderem auch die Aufnahmefähigkeit des Bodens und/oder der Pflanzen abschätzen, womit negative Wechselwirkungen zwischen den Hilfsstoffen und dem jeweiligen Verteilgut und/oder den Pflanzen weiter minimiert bzw. ausgeschlossen werden.

Mit anderen Worten ist für eine besonders bevorzugte Ausführungsform des erfindungsgemäßen Verfahrens vorgesehen, dass für die Anpassung der Ausbringmenge des wenigstens einen Hilfsstoffs die Bodenfeuchtigkeit der Nutzfläche während der Ausbringung und/oder die zu erwartende Bodenfeuchtigkeit zu einem späteren Zeitpunkt nach der Ausbringung berücksichtigt wird. Schäden am Verteilgut und/oder den Pflanzen, beispielsweise in Form von Verätzungen, sind somit zumindest nahezu ausgeschlossen. Alternativ oder zusätzlich kann auch vorgesehen sein, dass die Bodenfeuchtigkeit während und/oder nach der Ausbringung, insbesondere die entsprechenden Parameter, bereits in der vordefinierten Ausbringmenge berücksichtigt sind, sodass keine Anpassung der vordefinierten Ausbringmenge notwendig ist. Anders ausgedrückt wird dabei vorzugsweise die vordefinierte Ausbringmenge während der Ausbringung unverändert beibehalten. Eine derartige Ausführungsform hat den Vorteil, dass das Arbeitsgerät dabei besonders einfach ausgeführt sein kann und/oder Bedienungs- und/oder Einstellungsfehler ausgeschlossen sind.

In einer anderen Weiterbildung des erfindungsgemäßen Verfahrens wird wenigstens eine definierte Mengengrenze für die Ausbringmenge, insbesondere eine maximale und/oder minimale Ausbringmenge, abgerufen und/oder vorgegeben. Die Mengengrenze, insbesondere die maximale und/oder minimale Ausbringmenge, wird dabei vorzugsweise in Abhängigkeit der zum Zeitpunkt unmittelbar vor und/oder während der Ausbringung abrufbaren und/oder erfassbaren Wetter- und/oder Umgebungsdaten abgerufen und/oder vorgegeben. Vorzugsweise ist hierbei vorgesehen, dass die jeweilige Mengengrenze, insbesondere die jeweilige maximale und/oder minimale Ausbringmenge, in elektronischer Weise und je nach Wetter- und/oder Umgebungsdaten hinterlegt und/oder abgerufen wird. Mit anderen Worten werden dabei vorzugsweise unterschiedliche Mengengrenze, insbesondere unterschiedliche maximale und/oder minimale Ausbringmengen, für unterschiedliche Wetter- und/oder Umgebungsdaten hinterlegt, abgerufen und/oder vorgegeben. Alternativ oder zusätzlich kann die Mengengrenze für die Ausbringmenge, insbesondere die maximale und/oder minimale Ausbringmenge, manuell von einem Bediener, insbesondere anhand einer zugeordneten Eingabeeinrichtung, einstellbar und/oder anpassbar sein. Bevorzugt wird die Ausbringmenge ausgehend von der vordefinierten Ausbringmenge zwischen der vordefinierten Ausbringmenge und der definierten Mengengrenze, insbesondere der maximalen und/oder minimalen Ausbringmenge, angepasst. Besonders bevorzugt ist hierzu vorgesehen, dass in Abhängigkeit der Wetter- und/oder Umgebungsdaten ein definierter Faktor oder prozentualer Wert, insbesondere anhand einer Kennlinie, Kennfeld oder dergl., abgerufen und/oder vorgegeben wird, um den die Ausbringmenge gegenüber der vordefinierten Ausbringmenge für den Hilfsstoff angepasst werden kann und/oder angepasst wird. Mit anderen Worten wird somit vorzugsweise eine Ausbringmenge und/oder ein Ausbringmengenbereich vorgegeben, um welchen die angepasste Ausbringmenge die zuvor vordefinierte Ausbringmenge für den Hilfsstoff in Abhängigkeit der Wetter- und/oder Umgebungsdaten überschreiten und/oder unterschreiten darf. Somit werden Abweichungen zwischen der eigentlichen Sollmenge bzw. den vordefinierten Ausbringungen und den angepassten Ausbringmengen für den Hilfsstoff eingegrenzt, wodurch eine besonders zuverlässige Anpassung der Ausbringmengen für den Hilfsstoff, insbesondere auch bei Ausreißern innerhalb der Prognosen, erreicht ist.

In einer weiteren bevorzugten Ausführungsform des erfindungsgemäßen Verfahrens wird die Ausbringmenge zusätzlich in Abhängigkeit wenigstens eines Parameters angepasst. Dieser wenigstens eine Parameter betrifft vorzugsweise den Typ und/oder die Konzentration des auszubringenden Hilfsstoffs. Sofern der Hilfsstoff vorzugsweise als Düngemittel ausgeführt ist, kann hierbei der Düngertyp bzw. die Düngersorte und/oder die Konzentration des Düngers verstanden werden. Sofern der Hilfsstoff ferner bevorzugt als Pflanzenschutzmittel oder dergl. ausgeführt ist, kann hierbei der Typ des Pflanzenschutzmittels und/oder die Konzentration des Pflanzenschutzmittels, insbesondere wenigstens eines sich darin befindlichen Wirkstoffs, verstanden werden. Alternativ oder zusätzlich betrifft dieser wenigstens eine Parameter den Typ wenigstens eines zusätzlich zum Hilfsstoff auszubringenden Verteilguts, vorzugsweise des auszubringenden Saatguts. Insbesondere kann der Parameter dabei die Saatgutsorte betreffen, welche parallel und/oder zeitversetzt zum Hilfsstoff ausgebracht wird. Ferner betrifft der wenigstens eine Parameter alternativ oder zusätzlich teilflächenspezifisch und/oder punktuell erfasste und/oder ermittelte Boden-und/oder Pflanzeneigenschaften, welche vorzugsweise sensorisch während der Ausbringung erfasst werden. Vorzugsweise sind dazu die Feuchtigkeit und/oder Wassermengen im Boden und/oder an den Pflanzen, insbesondere deren Blattoberflächen, zu erfassen und/oder zu ermitteln. Besonders bevorzugt ist vorgesehen, dass auch wenigstens zwei Parameter bzw. eine Parameterkombination der vorgenannten Parameter berücksichtigt und/oder miteinander verglichen werden. Beispielsweise kann dabei eine bestimmte Type bzw. Sorte eines Hilfsstoffs aggressiver, das heißt beispielsweise stärker in Konkurrenz hinsichtlich der verfügbaren Wassermenge, gegenüber einem bestimmten Verteilgut, insbesondere Saatgut, oder einer Pflanze sein. Mit anderen Worten kann beispielsweise ein bestimmter Hilfsstoff, insbesondere ein bestimmtes Düngemittel, eher zu Schäden in form von Verätzungen am Verteilgut, insbesondere Saatgut, oder an den Pflanzen führen, als ein anderer Typ eines Hilfsstoffs oder umgekehrt. Somit werden den Wetter- und/oder Umgebungsdaten weitere Parameter berücksichtigt, welche die Wechselwirkungen zwischen Hilfsstoff und Verteilgut und/oder Pflanze beeinflussen, so dass die Ausbringmenge für den Hilfsstoff noch präziser angepasst wird.

In einer weiteren Weiterbildung des erfindungsgemäßen Verfahrens wird die angepasste Ausbringmenge, insbesondere eine Abweichung zwischen der vordefinierten und der angepassten Ausbringmenge, während der Ausbringung aufgezeichnet. Die Aufzeichnungen werden dabei vorzugsweise auf einem elektronischen Datenspeicher abgelegt. Alternativ oder zusätzlich werden die Aufzeichnungen, insbesondere zur weiteren Berücksichtigung, Weiterverarbeitung und/oder Auswertung, übertragen. Bevorzugt ist dabei eine kabellose Übertragung. Besonders bevorzugt werden die Aufzeichnungen an wenigstens ein weiteres bzw. anderes Arbeitsgerät übertragen. Alternativ oder zusätzlich können die Aufzeichnungen an wenigstens eine zentrale oder dezentrale Computer-und/oder Rechnereinheit, beispielsweise einen PC, ein Tablet, ein Mobiltelefon oder dergl., übertragen werden. Vorteilhaft ist dabei, dass die Aufzeichnungen und damit die angepassten Ausbringmengen zu einem späteren Zeitpunkt wiederverwendet werden können.

Des Weiteren ist ein erfindungsgemäßes Verfahren bevorzugt, bei welchem die aufgezeichnete angepasste Ausbringmenge, insbesondere die Abweichung zwischen der vordefinierten und der angepassten Ausbringmenge, während eines Betriebs des landwirtschaftlichen Arbeitsgeräts oder eines anderen landwirtschaftlichen Arbeitsgeräts in einem nachfolgenden (bzw. späteren) Ausbring- und/oder Bearbeitungsvorgang der landwirtschaftlichen Nutzfläche abgerufen und/oder berücksichtigt wird. Bevorzugt wird das landwirtschaftliche Arbeitsgerät und/oder das andere landwirtschaftliche Arbeitsgerät während des Betriebs in Abhängigkeit der aufgezeichneten angepassten Ausbringmenge, insbesondere der Abweichung, eingestellt. Eine derartige Ausführungsform hat unter anderem den Vorteil, dass eine erneute Erfassung gleicher Daten und/oder Parameter, insbesondere aus Wetter- und/oder Umgebungsdaten und/oder zusätzlicher Parameter, nicht zwingend erforderlich ist, wodurch zu erfassende Datenmengen insgesamt reduziert werden. Ferner kann somit auch eine bessere Rückverfolgung und/oder spätere Nachvollziehbarkeit für die Anpassungen der Ausbringmengen geschaffen werden.

Die der Erfindung zugrunde liegende Aufgabe wird ebenso mit einem landwirtschaftlichen Arbeitsgerät der eingangs genannten Art gelöst, welchem eine Steuerungs- und/oder Regelungseinrichtung zugeordnet ist und welches gemäß den Merkmalen des Anspruchs 9 ausgeführt ist. Hinsichtlich der Vorteile und Modifikationen des erfindungsgemäßen landwirtschaftlichen Arbeitsgeräts wird zunächst auf die Vorteile und Modifikationen des erfindungsgemäßen Verfahrens verwiesen.

Das landwirtschaftliche Arbeitsgerät kann dabei je nach Anwendung vorzugsweise als Sämaschine, Feldspritze, Streugerät, Hackgerät, Bodenbearbeitungsgerät oder dergleichen ausgebildet sein. Die Sämaschine kann dabei beispielsweise als pneumatische Sämaschine oder Einzelkornsämaschine ausgeführt sein. Das Streugerät kann dabei ferner als pneumatischer Düngerstreuer oder als Zentrifugaldüngerstreuer ausgeführt sein. Alternativ oder zusätzlich kann das Arbeitsgerät auch als Kombination aus mehreren derartigen Arbeitsgeräten ausgeführt sein.

Die Steuerungs- und/oder Regelungseinrichtung des Arbeitsgeräts umfasst vorzugsweise ein Bedien- und/oder Anzeigegerät, insbesondere ein Terminal, welches Nach Art eines ISO-Bus-Terminals ausgeführt ist. Alternativ oder zusätzlich umfasst die Steuerungs- und/oder Regelungseinrichtung eine Datenverarbeitungseinheit zum Steuern und/oder Regeln von Funktionen des Arbeitsgerätes. Die Steuerungs- und/oder Regelungseinrichtung ist ferner bevorzugt zumindest teilweise innerhalb des Arbeitsgeräts angeordnet. Alternativ oder zusätzlich kann die Steuerungs- und/oder Regelungseinrichtung auch ein mobiles Endgerät, wie beispielsweise ein Smartphone oder dergleichen, umfassen.

Die der Erfindung zugrunde liegende Aufgabe wird ebenso mit einem Steuer-und/oder Regelsystem der eingangs genannten Art gelöst, wobei das Steuer-und/oder Regelsystem gemäß den Merkmalen des Anspruchs 10 ausgeführt ist. Hinsichtlich der Vorteile und Modifikationen des erfindungsgemäßen Steuer-und/oder Regelsystems wird zunächst auf die Vorteile und Modifikationen des erfindungsgemäßen Verfahrens und des erfindungsgemäßen landwirtschaftlichen Arbeitsgeräts verwiesen.

Es wird ausdrücklich darauf hingewiesen, dass die Merkmale des erfindungsgemäßen Verfahrens und/oder der bevorzugten Ausführungsformen und/oder Ausführungsbeispiele, wie sie weiter oben beschrieben werden, einzeln oder miteinander kombinierbar bei dem erfindungsgemäßen landwirtschaftlichen Arbeitsgerät und/oder dem erfindungsgemäßen Steuer- und/oder Regelsystem Anwendung finden können. Dies gilt auch andersherum. So können auch Merkmale des erfindungsgemäßen landwirtschaftlichen Arbeitsgeräts und/oder des erfindungsgemäßen Steuer- und/oder Regelsystems mit weiteren Merkmalen des erfindungsgemäßen Verfahrens und/oder den bevorzugten Ausführungsformen und Ausführungsbeispielen kombiniert werden.

Das Steuer- und/oder Regelsystem umfasst hierbei wenigstens ein landwirtschaftliches Arbeitsgerät mit einer zugeordneten Steuerungs- und/oder Regelungseinrichtung, welche dazu eingerichtet ist, ein Verfahren zum Betreiben eines landwirtschaftlichen Arbeitsgeräts auszuführen. Insbesondere ist dabei vorgesehen, dass das Verfahren nach zumindest einem der vorgenannten bevorzugten Ausführungsformen des erfindungsgemäßen Verfahrens und/oder das landwirtschaftliche Arbeitsgerät nach zumindest einem der vorgenannten bevorzugten Ausführungsformen des erfindungsgemäßen Arbeitsgeräts ausgeführt ist.

Ferner ist ein Steuer- und/oder Regelsystem bevorzugt, mit wenigstens einem weiteren, insbesondere zweiten, landwirtschaftlichen Arbeitsgerät, welchem eine zweite Steuerungs- und/oder Regelungseinrichtung zugeordnet ist. Das weitere, insbesondere zweite, landwirtschaftliche Arbeitsgerät ist dabei vorzugsweise gleich zum ersten Arbeitsgerät, insbesondere welches die Wetter- und/oder Umgebungsdaten im Vorfeld erfasst, ausgebildet. Ferner ist auch vorstellbar, dass sich die Arbeitsgeräte hinsichtlich der Anwendung unterscheiden. So kann beispielsweise das erste (erfassende) Arbeitsgerät nach Art eines Streugeräts, insbesondere als Düngerstreuer, und das zweite Arbeitsgerät als Feldspritze ausgebildet sein. Andere Kombinationen von unterschiedlichen landwirtschaftlichen Arbeitsgeräten sind ebenso denkbar.

**In** einer bevorzugten Ausführungsform des erfindungsgemäßen Steuer- und/oder Regelsystems ist die zweite Steuerungs- und/oder Regelungseinrichtung dazu eingerichtet, die, insbesondere vom ersten Arbeitsgerät, aufgezeichneten angepassten Ausbringmengen, vorzugsweise der Abweichung, abzurufen und/oder zu berücksichtigen. Bevorzugt wird das zweite landwirtschaftliche Arbeitsgerät dabei während des Betriebs in Abhängigkeit der aufgezeichneten angepassten Ausbringmengen, insbesondere der Abweichungen, eingestellt.

Darüber hinaus ist ferner ein Steuer- und/oder Regelsystem bevorzugt, welches eine dritte Steuerungs- und/oder Regelungseinrichtung umfasst, wobei die dritte Steuerungs- und/oder Regelungseinrichtung dazu eingerichtet ist, das wenigstens eine, insbesondere erste, landwirtschaftliche Arbeitsgerät und/oder das wenigstens eine andere, insbesondere zweite, landwirtschaftliche Arbeitsgerät, vorzugsweise deren jeweilige erste und/oder zweite Steuerungs- und/oder Regelungseinrichtung, einzustellen. Besonders bevorzugt ist die dritte Steuerungs- und/oder Regelungseinrichtung zur Ferneinstellung des einen und/oder anderen, insbesondere des ersten und/oder zweiten, Arbeitsgerätes vorgesehen, beispielsweise via Funk oder dergleichen.

Bei einer besonders bevorzugten Ausführungsform des erfindungsgemäßen Steuer- und/oder Regelsystems ist die dritte Steuerungs- und/oder Regelungseinrichtung dazu eingerichtet, ein Verfahren auszuführen, welches gemäß wenigstens einer bevorzugten Ausführungsform des weiter oben näher beschriebenen erfindungsgemäßen Verfahrens ausgebildet ist

Weitere Einzelheiten der Erfindung sind der Beispielsbeschreibung und den Zeichnungen zu entnehmen. Die Zeichnungen zeigen
- Fig.1A: eine schematische Draufsicht auf ein erstes landwirtschaftliches Arbeitsgerät während dem Ausbringen auf einer landwirtschaftlichen Nutzfläche;
- Fig.1B: eine schematische Draufsicht auf ein zweites landwirtschaftliches Arbeitsgerät während dem Ausbringen auf einer landwirtschaftlichen Nutzfläche;
- Fig.2A: eine schematische Teilansicht der landwirtschaftlichen Nutzfläche aus Fig.1A zu einem späteren Zeitpunkt nach dem Ausbringen;
- Fig.2B: eine schematische Teilansicht der landwirtschaftlichen Nutzfläche aus Fig.1B zu einem späteren Zeitpunkt nach dem Ausbringen; und
- Fig.3: Ein schematischer Ablaufplan eines erfindungsgemäßen Verfahrens.

**In** der nachfolgenden Beschreibung werden gleiche Bezugszeichen für gleiche Gegenstände verwendet.

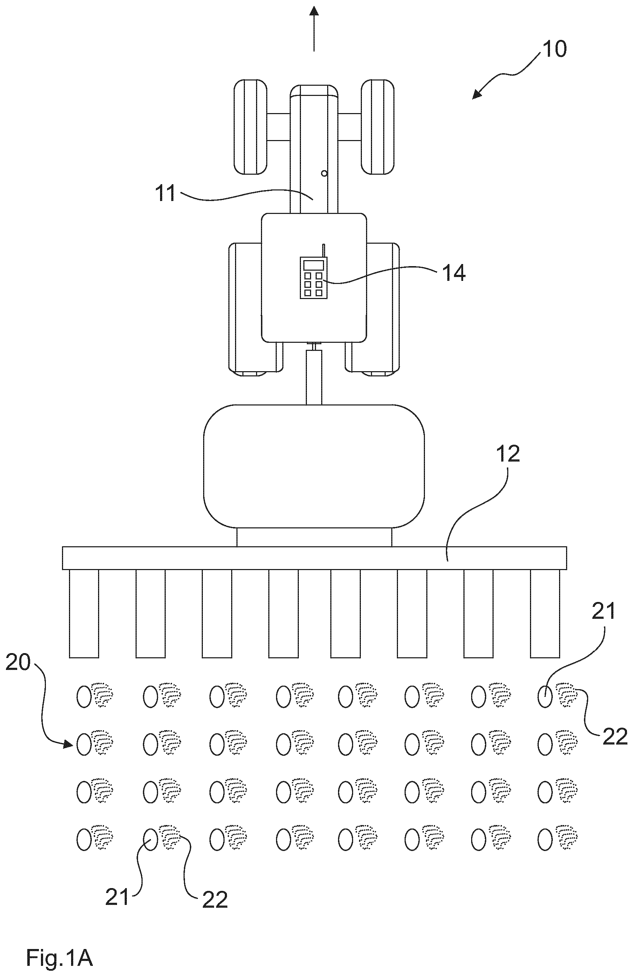

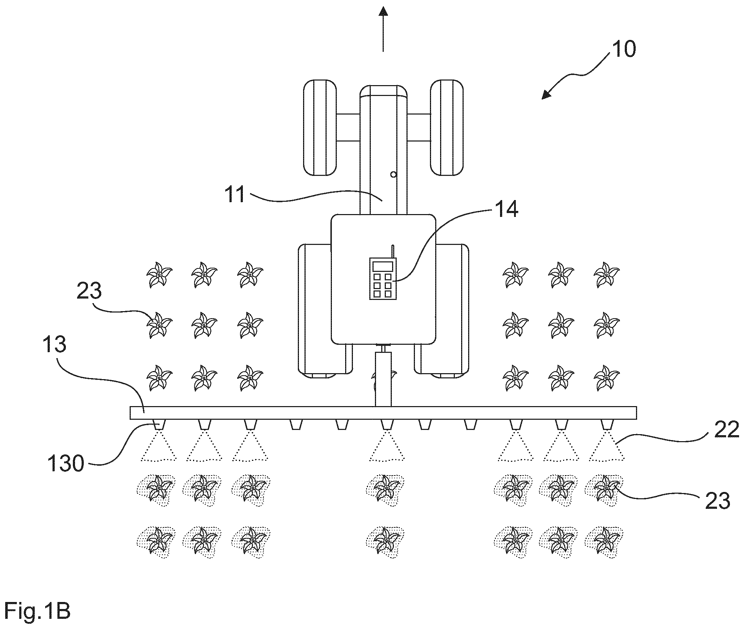

Die Figuren 1A und 1B zeigen jeweils ein landwirtschaftliches Arbeitsgerät 10 während des Betriebs auf einer landwirtschaftlichen Nutzfläche. **In** den gezeigten Ausführungsbeispielen ist das landwirtschaftliche Arbeitsgerät 10 jeweils als Anbaugerät ausgeführt, welches von einer landwirtschaftlichen Zugmaschine 11, nämlich einem Traktor, getragen wird. Alternativ kann das landwirtschaftliche Arbeitsgerät 10 auch gezogen oder selbstfahrend ausgebildet sein.

Die Fig.1A zeigt beispielhaft ein als Sämaschine 12 ausgebildetes landwirtschaftliches Arbeitsgerät 10 beim Ausbringen von Verteilgut 20, hier in Form von Saatgut 21 bzw. Saatgutkörnern.

Das landwirtschaftliche Arbeitsgerät 10 ist ferner dazu eingerichtet, wenigstens einen Hilfsstoff 22 auszubringen, welcher hier als schüttgutartiges Düngemittel bzw. Feststoff ausgeführt ist. Der Hilfsstoff 22 ist zur chemischen Reaktion mit dem Boden und/oder dem Verteilgut 20 vorgesehen und wird in diesem Ausführungsbeispiel benachbart und/oder im Bereich des Verteilguts 20, insbesondere des Saatguts, abgelegt.

In der Fig.1B ist beispielhaft ein als Feldspritze 13 ausgebildetes landwirtschaftliches Arbeitsgerät 10 zu sehen, welches zum Ausbringen bzw. Applizieren eines flüssigen Hilfsstoffs 22, nämlich Spritzflüssigkeit, vorgesehen ist. Der Hilfsstoff wird hierbei über Spritzdüsen 130 und in Form von Spritzfächern auf entlang der Nutzfläche befindlichen Pflanzen 23 ausgebracht. Der als Spritzflüssigkeit ausgebrachte Hilfsstoff 22 kann hierbei insbesondere als Düngemittel, Pflanzenschutzmittel, Schädlingsbekämpfungsmittel, Unkrautvernichtungsmittel oder dergleichen ausgeführt sein.

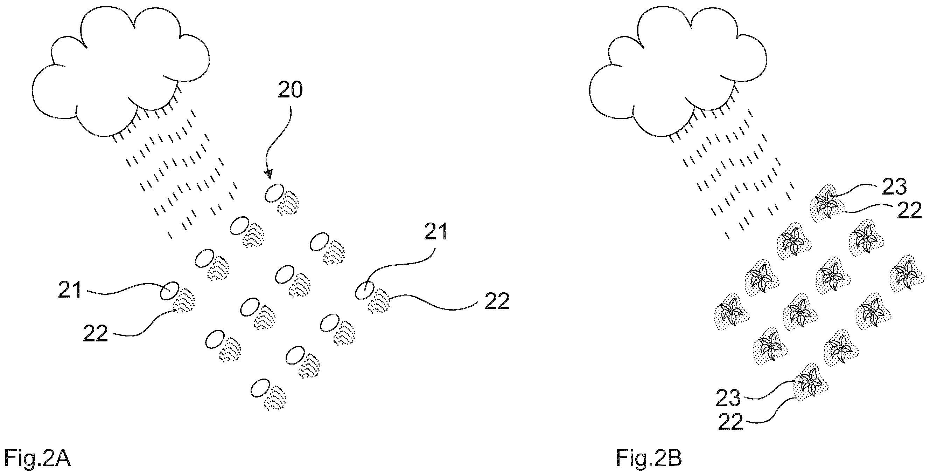

Die Figuren 2A und 2B zeigen einen Abschnitt der jeweiligen bearbeiteten und/oder behandelten landwirtschaftlichen Nutzfläche aus den zuvor weiter oben beschriebenen Ausführungsbeispielen zu einem späteren Zeitpunkt. Der Zeitpunkt kann dabei unmittelbar nach dem Ausbringen, beispielsweise 1 bis 60 Sekunden oder 1 bis 10 Minuten nach dem Ausbringen, sein. Alternativ oder zusätzlich kann es sich um einen Zeitpunkt etwa 1 bis 10 Stunde, 1 bis 10 Tage oder mehrere Wochen oder Monate nach dem Ausbringen handeln. Ferner kann es sich alternativ oder zusätzlich um einen Zeitpunkt handeln, während sich das landwirtschaftliche Arbeitsgerät 20 noch im Betrieb bzw. im Ausbringvorgang, insbesondere auf einem anderen noch unbearbeiteten und/oder unbehandelten Abschnitt auf der landwirtschaftlichen Nutzfläche, befindet.

Darüber hinaus ist in den Figuren 2A und 2B die jeweilige Wetter- und/oder Umgebungssituation schematisch angedeutet. Zum dargestellten Zeitpunkt liegt beispielhaft ein regnerisches Wetter, mit entsprechendem Niederschlag, und/oder eine feuchte bzw. nasse Umgebung vor. Alternativ oder zusätzlich dazu kann das Wetter und/oder die Umgebung unmittelbar vor und/oder während der Ausbringung des Hilfsstoffs 22 noch trocken sein.

Nachfolgend werden die oben beschriebenen Ausführungsbeispiele gemeinsam beschrieben und gilt somit entsprechend für das jeweilige Arbeitsgerät 20.

Dem landwirtschaftlichen Arbeitsgerät 10 ist eine Steuerungs- und/oder Regelungseinrichtung 14 zugeordnet, welche dazu eingerichtet ist, wenigstens eine vordefinierte, insbesondere georeferenziert und/oder elektronisch hinterlegte, Ausbringmenge für den Hilfsstoff 22 abzurufen und/oder am Arbeitsgerät 10 einzustellen. Das Abrufen und/oder Einstellen der Ausbringmenge kann dabei je nach Ausführung automatisiert und/oder durch manuelle Vorgabe eines Bedieners erfolgen. Die Steuerungs- und/oder Regelungseinrichtung 14 umfasst insbesondere ein elektronisches Terminal, insbesondere eine Rechner-, Anzeige-und/oder Bedieneinrichtung. Des Weiteren kann der Steuerungs- und/oder Regelungseinrichtung 14 alternativ oder zusätzlich ein mobiles Endgerät, beispielsweise nach Art eines Smartphones, Tablets oder dergleichen, zugeordnet sein.

Darüber hinaus ist die Steuerungs- und/oder Regelungseinrichtung 14 dazu eingerichtet, die Ausbringmenge für den Hilfsstoff 22 unmittelbar vor und/oder während der Ausbringung in Abhängigkeit erfassbarer und/oder abrufbarer Wetter-und/oder Umgebungsdaten anzupassen.

Die Wetter- und/oder Umgebungsdaten können dabei je nach Ausführung das zum Zeitpunkt der Ausbringung, insbesondere lokal am Ort der Nutzfläche, vorliegende Wetter und/oder den Umgebungszustand betreffen. Beim Wetter kann dies insbesondere die Lufttemperatur, die Luftfeuchtigkeit, den Niederschlag, die Sonnenscheindauer und/oder den Wind bzw. die Luftbewegungen betreffen. Bei der Umgebung bzw. dem Umgebungszustand kann dies insbesondere die Boden-und/oder Pflanzenfeuchtigkeit (insb. Feuchtigkeit der Blattoberfläche) betreffen.

Alternativ oder zusätzlich können die Wetter- und/oder Umgebungsdaten auch historische Werte und/oder Aufzeichnungen für das Wetter, insbesondere den Niederschlag, und/oder historische Werte und/oder Aufzeichnungen für die Bodenfeuchtigkeit umfassen. Beispielsweise können dies Werte und/oder Aufzeichnungen für einen Zeitpunkt oder Zeitraum von wenigen Minuten vor der Ausbringung bis zu mehreren Wochen, Monaten oder Jahren vor der Ausbringung sein.

Ferner ist vorgesehen, dass die Wetter- und/oder Umgebungsdaten alternativ oder zusätzlich Prognosen für das Wetter und/oder Prognosen für die Bodenfeuchtigkeit umfassen. Insbesondere können die Prognosen für das Wetter eine Niederschlagsprognose umfassen. Die Prognosen betreffen dabei die Wetter-und/oder Umgebungsdaten, insbesondere das Wetter und/oder den Umgebungszustand, für einen späteren Zeitpunkt während und/oder nach dem Ausbringen des Hilfsstoffs 22, insbesondere zum Zeitpunkt, welcher schematisch in den Figuren 2A und 2B dargestellt ist.

Des Weiteren ist alternativ oder zusätzlich vorgesehen, dass die Ausbringmenge während der Ausbringung an die Prognosen, insbesondere an eine zu erwartende Niederschlagsmenge und/oder Bodenfeuchtigkeit, angepasst wird. Die Ausbringmenge kann bei entsprechender Ausführung des landwirtschaftlichen Arbeitsgeräts 10 teilflächenspezifisch und/oder punktuell entlang der Nutzfläche anpassbar sein und bei Bedarf teilflächenspezifisch und/oder punktuell entlang der Nutzfläche angepasst werden. Der Bedarf kann sich dabei aufgrund der vorgegebenen Auflösung der vordefinierten Ausbringmengen und/oder der Auflösung der Wetter- und/oder Umgebungsdaten ergeben.

Die Ausbringmenge kann zusätzlich auch in Abhängigkeit wenigstens eines anderen Parameters angepasst werden. Wenigstens einer dieser Parameter kann dabei die Type und/oder Konzentration des Hilfsstoffs 22 betreffen. Unter der Konzentration des Hilfsstoffs 22 kann ferner die Konzentration wenigstens eines innerhalb des Hilfsstoffs 22 befindlichen Wirkstoffs verstanden werden. Alternativ oder zusätzlich kann wenigstens einer dieser Parameter auch die Type des wenigstens einen zusätzlich zum Hilfsstoff 22 auszubringenden Verteilguts 20, insbesondere Saatguts, und/oder der zu applizierenden Pflanzen sein. Ferner kann wenigstens einer dieser Parameter alternativ oder zusätzlich wenigstens eine teilflächenspezifisch und/oder punktuell erfasste Boden- und/oder Pflanzeneigenschaften sein, welche insbesondere entweder automatisiert und/oder sensorisch während der Ausbringung erfasst und/oder manuell durch einen Bediener vorgegeben wird.

Dabei ist insbesondere vorgesehen, dass wenigstens eine definierte Mengengrenze für die Ausbringmenge abgerufen und/oder vorgegeben wird. Die Mengengrenze kann je nach Ausführung eine maximal und/oder minimal ausbringbare Ausbringmenge sein. Die Ausbringmenge für den Hilfsstoff 22 wird während der Ausbringung ausgehend von der vordefinierten Ausbringmenge zwischen der vordefinierten Ausbringmenge und der der definierten Mengengrenze, insbesondere der maximalen und/oder minimalen Ausbringmenge, angepasst. Mit anderen Worten wird mittels der einen oder den mehreren Mengengrenzen ein definierter Ausbringmengenbereich vorgegeben, innerhalb dem die Ausbringmenge für den Hilfsstoff 22 über die Steuerungs-und/oder Regelungseinrichtung 14 einstellbar und/oder anpassbar ist.

Darüber hinaus ist alternativ oder zusätzlich vorgesehen, dass die angepassten Ausbringmengen, insbesondere eine Abweichung zwischen der vordefinierten und der angepassten Ausbringmenge, während der Ausbringung aufgezeichnet werden. Die Aufzeichnungen können dabei in elektronischer Weise auf einem der Steuerung- und/oder Regelungseinrichtung 14 zugeordneten Datenspeicher abgelegt werden. Ferner können die Aufzeichnungen auch alternativ oder zusätzlich per Fernübertragung, z.B. Funk oder dergleichen, an wenigstens einen weiteren oder anderen Datenspeicher übermittelt werden.

Die Aufzeichnungen können während des Betriebs des landwirtschaftlichen Arbeitsgeräts 10, insbesondere von der Steuerungs- und/oder Regelungseinrichtung 14, abgerufen und/oder zum Anpassen der Ausbringmenge für den Hilfsstoff 22 berücksichtigt werden. Insbesondere ist hierbei das Abrufen und/oder Berücksichtigen der Aufzeichnungen in einem späteren und/oder nachfolgenden Betrieb des landwirtschaftlichen Arbeitsgeräts 10, also in einem anderen Ausbringvorgang, vorgesehen. Das landwirtschaftliche Arbeitsgerät 10 wird somit während des anderen Ausbringvorgangs alternativ oder zusätzlich in Abhängigkeit der aufgezeichneten angepassten Ausbringmengen, insbesondere der Abweichungen, eingestellt.

Ferner ist auch denkbar, dass anhand der Aufzeichnungen alternativ oder zusätzlich die Ausbringmengen für den Hilfsstoff 22 an einem anderen landwirtschaftlichen Arbeitsgerät, entweder der gleichen oder einer anderen Art, eingestellt werden, insbesondere nachdem die Aufzeichnungen vom anderen in den Figuren nicht gezeigten Arbeitsgerät und/oder von einer anderen Steuerung-und/oder Regelungseinrichtung abgerufen und/oder berücksichtigt werden.

Ferner kann alternativ oder zusätzlich ein Steuer- und/oder Regelsystem vorgesehen sein, welches zumindest eines oder mehrere der zuvor weiter oben beschriebenen landwirtschaftlichen Arbeitsgeräte 10 und/oder Steuerungs-und/oder Regelungseinrichtungen 14 umfasst. Insbesondere kann das Steuer-und/oder Regelsystem wenigstens ein erstes landwirtschaftliches Arbeitsgerät mit einer ersten Steuerungs- und/oder Regelungseinrichtung und/oder wenigstens ein zweites landwirtschaftliches Arbeitsgerät mit einer zweiten Steuerungs- und/oder Regelungseinrichtung umfassen. Alternativ oder zusätzlich kann das Steuer-und/oder Regelsystem auch wenigstens ein drittes Steuerungs- und/oder Regelungseinrichtung umfassen, welches einem oder mehreren landwirtschaftlichen Arbeitsgeräten zugeordnet ist. Die dritte Steuerungs- und/oder Regelungseinrichtung kann dazu eingerichtet sein, mit der ersten und/oder zweiten Steuerungs- und/oder Regelungseinrichtung zu kommunizieren und/oder die Ausbringmengen für den Hilfsstoff 22 an einem oder mehreren landwirtschaftlichen Arbeitsgeräten 10, insbesondere in Abhängigkeit der Wetter-und/oder Umgebungsdaten, anzupassen. Die dritte Steuerungs- und/oder Regelungseinrichtung kann beispielsweise ein Smartphone, ein PersonalComputer oder dergleichen sein.

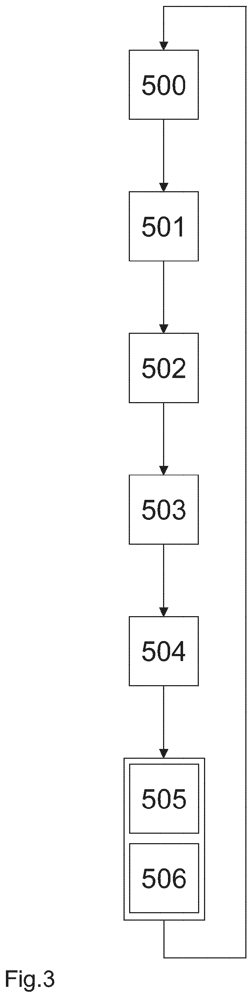

Das wenigstens eine oder die mehreren zuvor anhand der Ausführungsbeispiele beschriebenen landwirtschaftlichen Arbeitsgeräte 10, Steuerungs- und/oder Regelungseinrichtungen 14 und/oder das Steuer- und/oder Regelsystem können alternativ oder zusätzlich jeweils dazu eingerichtet sein, das anhand der Fig.3 beschriebene Verfahren zumindest teilweise auszuführen, welches nachfolgend detailliert beschrieben ist.

Das Verfahren umfasst einen Schritt 500, bei dem wenigstens eine vordefinierte, insbesondere georeferenziert hinterlegte, Ausbringmenge für den Hilfsstoff 22 an wenigstens einem landwirtschaftlichen Arbeitsgerät 10 abgerufen und/oder eingestellt wird.

In einem zweiten Schritt 501 wird der wenigstens eine, insbesondere nach Art von Düngemittel ausgeführte, Hilfsstoff 22, welcher zur chemischen Reaktion mit dem Boden, dem Verteilgut 20 und/oder den Pflanzen 23 vorgesehen ist, auf einer landwirtschaftlichen Nutzfläche ausgebracht.

In einem dritten Schritt 502 wird die Ausbringmenge für den Hilfsstoff 22 unmittelbar vor und/oder während der Ausbringung in Abhängigkeit erfassbarer und/oder abrufbarer Wetter- und/oder Umgebungsdaten angepasst.

Ein alternativer oder zusätzlicher vierter Schritt 503 umfasst ein Abrufen und/oder Vorgeben wenigstens einer definierten Mengengrenze für die Ausbringmenge, insbesondere einer maximalen und/oder minimalen Ausbringmenge für den Hilfsstoff 22, innerhalb welcher die Ausbringmenge während des Ausbringens einstellbar und/oder anpassbar ist.

Ein weiterer alternativer oder zusätzlicher fünfter Schritt 504 umfasst das Aufzeichnen der angepassten Ausbringmengen, insbesondere einer Abweichung zwischen der vordefinierten und der angepassten Ausbringmengen, während der Ausbringung.

In einem weiteren alternativen oder zusätzlichen sechsten Schritt 505 werden die aufgezeichneten angepassten Ausbringmengen, insbesondere die Abweichung zwischen der vordefinierten und der angepassten Ausbringmengen, während eines Betriebs des landwirtschaftlichen Arbeitsgeräts 10 oder eines anderen landwirtschaftlichen Arbeitsgeräts in einem nachfolgenden und/oder anderen Ausbring- und/oder Bearbeitungsvorgang der oder einer anderen landwirtschaftlichen Nutzfläche abgerufen und/oder berücksichtigt. In einem optionalen Schritt 506 das landwirtschaftliche Arbeitsgerät 10 und/oder das andere landwirtschaftliche Arbeitsgerät während des Betriebs in Abhängigkeit der aufgezeichneten angepassten Ausbringmengen, insbesondere der Abweichungen, eingestellt.

Die zuvor anhand der Fig.3 beschriebenen Schritte des Verfahrens können in einem alternativen oder zusätzlichen, hier nicht gezeigten Ausführungsbeispiel, auch zumindest teilweise in einer anderen Reihenfolge durchgeführt werden.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in den Figuren gezeigte Geometrien nur beispielhaft sind und auch in beliebigen anderen Ausgestaltungen möglich sind.

### Bezugszeichenliste

- 10: Landwirtschaftliches Arbeitsgerät
- 11: Zugmaschine
- 12: Sämaschine
- 13: Feldspritze
- 130: Spritzdüse
- 14: Steuerungs- und/oder Regelungseinrichtung
- 20: Verteilgut
- 21: Saatgut
- 22: Hilfsstoff
- 23: Pflanze

## Patentansprüche

1. Verfahren zum Betreiben eines landwirtschaftlichen Arbeitsgeräts (10), mit den Schritten:
- Ausbringen von wenigstens einem, vorzugsweise nach Art von Düngemittel ausgeführten, Hilfsstoff (22), welcher zur chemischen Reaktion mit dem Boden und/oder Pflanzen (23) auf einer landwirtschaftlichen Nutzfläche vorgesehen ist;
- Abrufen und/oder Einstellen wenigstens einer vordefinierten, vorzugsweise georeferenziert hinterlegten, Ausbringmenge für den Hilfsstoff (22); und
- Anpassen der Ausbringmenge für den Hilfsstoff (22) unmittelbar vor und/oder während der Ausbringung in Abhängigkeit erfassbarer und/oder abrufbarer Wetter- und/oder Umgebungsdaten.

2. Verfahren nach Anspruch 1, **dadurch gekennzeichnet, dass** die Wetter-und/oder Umgebungsdaten Prognosen für das Wetter, insbesondere eine Niederschlagsprognose, und/oder Prognosen für die Bodenfeuchtigkeit umfassen.

3. Verfahren nach Anspruch 2, **dadurch gekennzeichnet, dass** die Ausbringmenge, vorzugsweise teilflächenspezifisch und/oder punktuell, an die Prognosen, vorzugsweise an eine zu erwartende Niederschlagsmenge und/oder Bodenfeuchtigkeit, angepasst wird.

4. Verfahren nach zumindest einem der vorgenannten Ansprüche, **dadurch gekennzeichnet, dass** die Wetter- und/oder Umgebungsdaten historische Aufzeichnungen für das Wetter, insbesondere den Niederschlag, und/oder historische Aufzeichnungen für die Bodenfeuchtigkeit umfassen.

5. Verfahren nach zumindest einem der vorgenannten Ansprüche,
**gekennzeichnet durch** den Schritt:
- Abrufen und/oder Vorgeben wenigstens einer definierten Mengengrenze für die Ausbringmenge, insbesondere einer maximalen und/oder minimalen Ausbringmenge;
wobei die Ausbringmenge ausgehend von der vordefinierten Ausbringmenge zwischen der vordefinierten Ausbringmenge und der definierten Mengengrenze, insbesondere der maximalen und/oder minimalen Ausbringmenge, anpassbar ist und/oder angepasst wird.

6. Verfahren nach zumindest einem der vorgenannten Ansprüche, **dadurch gekennzeichnet, dass** die Ausbringmenge zusätzlich in Abhängigkeit wenigstens eines der nachfolgenden Parameter angepasst wird:
- Typ und/oder Konzentration des Hilfsstoffs (22); und/oder
- Typ wenigstens eines zusätzlich zum Hilfsstoff (22) auszubringenden Verteilguts (20), vorzugsweise Saatguts (21); und/oder
- Teilflächenspezifisch und/oder punktuell erfasste Boden- und/oder Pflanzeneigenschaften, welche vorzugsweise sensorisch während der Ausbringung erfasst werden.

7. Verfahren nach zumindest einem der vorgenannten Ansprüche, **gekennzeichnet durch** den Schritt:
- Aufzeichnen der angepassten Ausbringmenge, insbesondere einer Abweichung zwischen der vordefinierten und der angepassten Ausbringmenge, während der Ausbringung.

8. Verfahren nach Anspruch 7, **gekennzeichnet durch** den Schritt:
- Abrufen und/oder Berücksichtigen der aufgezeichneten angepassten Ausbringmenge, insbesondere der Abweichung zwischen der vordefinierten und der angepassten Ausbringmenge, während eines Betriebs des landwirtschaftlichen Arbeitsgeräts (10) oder eines anderen landwirtschaftlichen Arbeitsgeräts (10) in einem nachfolgenden Ausbring-und/oder Bearbeitungsvorgang der landwirtschaftlichen Nutzfläche; wobei vorzugsweise das landwirtschaftliche Arbeitsgerät (10) und/oder das andere landwirtschaftliche Arbeitsgerät (10) während des Betriebs in Abhängigkeit der aufgezeichneten angepassten Ausbringmenge, insbesondere der Abweichung, eingestellt wird.

9. Landwirtschaftliches Arbeitsgerät (10) mit einer zugeordneten Steuerungs-und/oder Regelungseinrichtung (14), **dadurch gekennzeichnet, dass** die Steuerungs- und/oder Regelungseinrichtung (14) dazu eingerichtet ist, dass Verfahren nach zumindest einem der vorgenannten Ansprüche auszuführen.

10. Steuer- und/oder Regelsystem, umfassend wenigstens ein landwirtschaftliches Arbeitsgerät (10) mit einer zugeordneten Steuerungs- und/oder Regelungseinrichtung (14), welche dazu eingerichtet ist, ein Verfahren zum Betreiben eines landwirtschaftlichen Arbeitsgeräts (10) auszuführen, **dadurch gekennzeichnet, dass** das Verfahren nach zumindest einem der vorgenannten Ansprüche 1 bis 8 ausgeführt ist und/oder das landwirtschaftliche Arbeitsgerät (10) nach dem vorgenannten Anspruch 9 ausgeführt ist.

11. Steuer- und/oder Regelsystem nach Anspruch 10, mit wenigstens einem weiteren, insbesondere zweiten, landwirtschaftlichen Arbeitsgerät (10), welchem eine zweite Steuerungs- und/oder Regelungseinrichtung (14) zugeordnet ist, **dadurch gekennzeichnet, dass** die zweite Steuerungs-und/oder Regelungseinrichtung (14) dazu eingerichtet ist, dass Verfahren nach Anspruch 8 auszuführen.

12. Steuer- und/oder Regelsystem nach zumindest einem der vorgenannten Ansprüche 10 oder 11, mit einer dritten Steuerungs- und/oder Regelungseinrichtung, wobei die dritte Steuerungs- und/oder Regelungseinrichtung dazu eingerichtet ist, das wenigstens eine landwirtschaftliche Arbeitsgerät (10), insbesondere die dem landwirtschaftlichen Arbeitsgerät (10) zugeordnete Steuerungs- und/oder Regelungseinrichtung (14), einzustellen, **dadurch gekennzeichnet, dass** die dritte Steuerungs- und/oder Regelungseinrichtung dazu eingerichtet ist, dass Verfahren nach zumindest einem der vorgenannten Ansprüche 1 bis 8 auszuführen.
